(19) Europäisches Patentamt
European Patent Office
Office européen des brevets

(11) **EP 1 249 060 B1**

(12) **EUROPÄISCHE PATENTSCHRIFT**

| | |
|---|---|
| (45) Veröffentlichungstag und Bekanntmachung des Hinweises auf die Patenterteilung:<br>**26.05.2004   Patentblatt 2004/22** | (51) Int Cl.⁷: **H02H 6/00**, H02H 7/085 |
| (21) Anmeldenummer: **01942803.6** | (86) Internationale Anmeldenummer:<br>**PCT/EP2001/000231** |
| (22) Anmeldetag: **10.01.2001** | (87) Internationale Veröffentlichungsnummer:<br>**WO 2001/054246 (26.07.2001 Gazette 2001/30)** |

(54) **VERFAHREN ZUM SCHUTZ EINES ELEKTROMOTORS VOR THERMISCHER ÜBERLASTUNG**

METHOD FOR PROTECTING AN ELECTRICAL MOTOR AGAINST THERMAL OVERLOAD

PROCEDE POUR LA PROTECTION D'UN MOTEUR ELECTRIQUE D'UNE SURCHARGE THERMIQUE

| | |
|---|---|
| (84) Benannte Vertragsstaaten:<br>**DE** | (73) Patentinhaber: **Conti Temic Microelectronic GmbH**<br>**90411 Nürnberg (DE)** |
| (30) Priorität: **20.01.2000   DE 10002242** | (72) Erfinder: **SCHULTER, Wolfgang**<br>**88709 Meersburg (DE)** |
| (43) Veröffentlichungstag der Anmeldung:<br>**16.10.2002   Patentblatt 2002/42** | (56) Entgegenhaltungen:<br>**EP-A- 0 828 330        US-A- 4 413 325** |

**Beschreibung**

Elektrische Antriebseinheiten werden in vielfältigen Anwendungsgebieten zur Betätigung beweglicher Teile eingesetzt; beispielsweise werden im Kfz-Bereich verschiedene bewegliche Teile des Kraftfahrzeugs (Sitze, Fensterheber, Schiebedächer etc.) mittels elektrischer Antriebseinheiten verstellt. Elektrische Antriebseinheiten bestehen aus einem Elektromotor (bsp. einem Gleichstrommotor) zur Erzeugung und Bereitstellung von elektrischer Antriebsleistung und aus einem Elektronikmodul zur Ansteuerung und Überwachung des Elektromotors (beispielsweise zur Drehzahl- und Leistungsregelung des Elektromotors) sowie ggf. zur Realisierung zusätzlicher Funktionen.

Da die Elektromotoren dieser elektrischer Antriebseinheiten aus Kostengründen und aufgrund von Gewichtseinsparung in der Regel nicht dauerbetastungsfähig sind, müssen sie vor einer oftmals zur Zerstörung führenden thermischen Überlastung (vor einer Überhitzung durch Eigenerwärmung) geschützt werden. Kritische Elemente des Elektromotors sind hierbei die Ankerwicklung, die Kohlebürsten, die Lager, sowie alle Kunststoffteile.

Zum Schutz des Elektromotors vor thermischer Überlastung kann im Innern des Elektromotors ein Thermoschalter (bsp. ein Bimetallschalter) vorgesehen werden, der beim Erreichen einer bestimmten Grenztemperatur anspricht und den Stromfluß durch den Elektromotor (den Motorstrom) unterbricht. Nachteilig hierbei sind die Kosten und der Platzbedarf des Thermoschalters im Elektromotor und die Deaktivierung sämtlicher Funktionen der elektrischen Antriebseinheit beim Ansprechen des Thermoschalters, insbesondere auch der Notfallfunktionen (bsp. kann bei elektrischen Antriebseinheiten mit einem Einklemmschutz eine Unterbrechung des Motorstroms durch den Thermoschalter genau dann erfolgen, wenn ein Hindernis eingeklemmt wurde - somit kann der Elektromotor nicht mehr bewegt werden, bsp. kann somit auch die Drehrichtung des Elektromotors nicht mehr reversiert werden).

Aus der EP 0 332 568 B1 und der DE 25 49 850 A1 sind Verfahren bekannt, die eine Temperaturerhöhung während der Betätigung des Elektromotors indirekt aus der aufgrund der abgegebenen elektrischen Leistung des Elektromotors erzeugten Wärme bestimmen. Nachteilig hierbei ist, daß nur Relativtemperaturen betrachtet werden und die Absoluttemperatur (die tatsächliche Temperatur) nicht bekannt ist; daher muß aus Sicherheitsgründen bei der Definition von Grenztemperaturen die höchste vorkommende Umgebungstemperatur berücksichtigt werden ("worst case" Betrachtung), wodurch der Einsatzbereich des Elektromotors stark eingeschränkt wird.

Aus der US 4,413,325 istr darüber hinaus ein Verfahren der gattungsgemäßen Art zu entnehmen, bei dem der Ankerwiderstand als temperaturabhängige Größe erfasst und aus dessen Veränderung in Bezug zu einem Referenzwert auf die Temperatur geschlossen wird.

Der Erfindung liegt die Aufgabe zugrunde, ein Verfahren zum Schutz eines Elektromotors vor thermischer Überlastung anzugeben, das demgegenüber vorteilhafte Eigenschaften aufweist, insbesondere mit dem ein Schutz des Elektromotors ohne Einschränkung des Einsatzbereichs auf einfache Weise und geringen Kosten mit dennoch hoher Zuverlässigkeit erreicht werden kann.

Diese Aufgabe wird erfindungsgemäß durch die Merkmale im Kennzeichen des Patentanspruchs 1 gelöst. Vorteilhafte Weiterbildungen des Verfahrens sind Bestandteil der weiteren Patentansprüche.

Der Erfindung liegt die Erkenntnis zugrunde, daß ein sehr effizienter Schutz des Elektromotors vor thermischer Überlastung implementiert werden kann, wenn bei Kenntnis von Motorkenngrößen des Elektromotors (bsp. Motorstrom, Motorspannung und Motordrehzahl bzw. Periodendauer) unter Berücksichtigung mindestens eines temperaturabhängigen Motorparameters Absoluttemperaturen als Entscheidungskriterium für das Ergreifen von Maßnahmen bezüglich des Stromflusses durch den Elektromotor bestimmt werden.

Auf der Grundlage eines vorgegebenen funktionalen Zusammenhangs zwischen dem mindestens einen temperaturabhängigen Motorparameter und der Temperatur (d.h. der vorgegebenen funktionalen Temperaturabhängigkeit des mindestens einen Motorparameters) und bei Kenntnis eines Referenzwerts für den mindestens einen temperaturabhängigen Motorparameter (bsp. entweder aufgrund einer Referenzmessung bei einer definierten Temperatur oder aufgrund eines vorgegebenen Normwerts bei einer definierten Temperatur) erhält man eine Beziehung für die Absoluttemperatur, in der der Wert (Absolutwert) des mindestens einen temperaturabhängigen Motorparameters noch unbestimmt ist. Anhand eines den mindestens einen temperaturabhängigen Motorparameter und mindestens eine Motorkenngröße verknüpfenden Motorenmodells für den Elektromotor wird eine Motorengleichung definiert; hierdurch wird eine Beziehung zwischen den betrachteten Motorkenngrößen einerseits (bsp. Motorstrom bzw. Ankerstrom und/oder Motorspannung und/oder Motordrehzahl bzw. Periodendauer der Motordrehung) und dem mindestens einen temperaturabhängigen Motorparameter andererseits hergestellt. Während eines Betätigungsvorgangs des Elektromotors wird mindestens ein Meßvorgang vorgegeben: während jedes Meßvorgangs werden in mindestens zwei aufeinanderfolgenden Meßzeitpunkten die aktuellen Werte der betrachteten Motorkenngrößen bestimmt und mit Hilfe der hieraus resultierenden Motorengleichungen für die Meßzeitpunkte die Werte (Absolutwerte) des mindestens einen temperaturabhängigen Motorparameters bestimmt; bsp. werden die Werte des mindestens einen temperaturabhängigen Motorparameters anhand der in den Meßzeitpunkten eines Meßvorgangs erhaltenen Motorengleichungen (d.h. anhand eines Gleichungssystems mit einer der Anzahl der Meßzeitpunkte eines Meßvorgangs entsprechenden Anzahl an Gleichungen) durch Matrizen-Transformation (Gauß-Transformation) unter Verwendung von transponierten Matrizen bestimmt oder für Echtzeitanwendungen mit Microcontrollern unter Verwendung gegen die "richtige" Lösung konvergierender adaptiver Algorithmen, bsp. eines LMS-Algorithmus oder eines RLS-Algorithmus.

Bei Kenntnis der Werte des mindestens einen temperaturabhängigen Motorparameters kann nun der Absolutwert der Temperatur. des Elektromotors ermittelt werden; für diesen Absolutwert der Temperatur wird dann eine Grenztemperatur definiert, deren Erreichen als Entscheidungskriterium für die Vorgabe des Stromflusses durch den Elektromotor (den Ankerstrom) dient, bsp. als Abschaltkriterium für das Abschalten des Stromflusses durch den Elektromotor.

Als temperaturabhängige Motorparameter werden der zur Erregung des Elektromotors erforderliche magnetische Fluß und vorzugsweise außerdem der elektrische Widerstand der Ankerwicklung des Elektromotors (der Ankerwiderstand) herangezogen und deren Werte (Absolutwerte) aus einer die Motorkenngrößen Motorstrom (Ankerstrom), Motorspannung und Motordrehzahl sowie die herangezogenen temperaturabhängigen Motorparameter Ankerwiderstand und magnetischer Fluß miteinander verknüpfenden Motorengleichung bestimmt. Insbesondere kann aus der Temperaturabhängigkeit des magnetischen Flusses auf die "Außentemperatur" des Elektromotors geschlossen werden, d.h. man erhält hierdurch die Temperatur in der unmittelbaren Umgebung des Elektromotors, während aus der Temperaturabhängigkeit des Ankerwiderstands auf die "Innentemperatur" des Elektromotors geschlossen werden kann, d.h. man erhält hierdurch die im Innern des Elektromotors (am Rotor des Elektromotors) selbst herrschende Temperatur. Die Grenztemperatur, bei deren Erreichen der Stromfluß durch den Elektromotor beeinflußt wird (bsp. abgeschaltet wird), kann in Abhängigkeit der herangezogenen temperaturabhängigen Motorparameter unterschiedlich vorgegeben werden - insbesondere können auch für die "Außentemperatur" und die "Innentemperatur" des Elektromotors unterschiedliche Grenztemperaturen vorgegeben werden.

Die während eines Betätigungsvorgangs des Elektromotors bestimmten Werte der Motorkenngrößen können auch für nachfolgende Meßvorgänge und/oder Betätigungsvorgänge des Elektromotors berücksichtigt werden, d.h. zusätzlich zu den während der nachfolgenden Meßvorgänge und/oder Betätigungsvorgänge gemessenen Motorkenngrößen werden auch die Werte zurückliegender Meßvorgänge und/oder Betätigungsvorgänge betrachtet - hierdurch wird eine Mittelwertbildung vorgenommen und der Einfluß von Störungen eliminiert bzw. reduziert. Die Werte der temperaturabhängigen Motorparameter brauchen nicht in allen Fällen während des gesamten Betätigungsvorgangs des Elektromotors bestimmt werden; vielmehr genügt es oftmals den Wert eines temperaturabhängigen Motorparameters während eines Meßvorgangs in der Anfangsphase des Betätigungsvorgangs des Elektromotors zu bestimmen und diesen Wert auch für spätere Meßvorgänge dieses Betätigungsvorgangs des Elektromotors zu verwenden. Dies kann insbesondere bei solchen temperaturabhängigen Motorparametem genügen, die unempfindlich gegenüber unterschiedlichen Betriebsbedingungen des Elektromotors oder gegenüber über unterschiedlichen Betriebsbedingungen des Elektromotors oder gegenüber äußeren Einflüssen sind (d.h. bei temperaturabhängigen Motorparametern die für bestimmte Betriebsbedingungen des Elektromotors oder für alle Betriebsbedingungen des Elektromotors näherungsweise konstant sind).

Die Anzahl der Meßvorgänge während eines Betätigungsvorgangs des Elektromotors und die Anzahl der Meßzeitpunkte pro Meßvorgang werden insbesondere in Abhängigkeit der gewünschten Genauigkeit für die Bestimmung der Absoluttemperatur und der Betriebsbedingungen während des Betätigungsvorgangs vorgegeben; bsp. werden für eine hohe Genauigkeit bei der Bestimmung der Werte der temperaturabhängigen Motorparameter und damit für eine hohe Genauigkeit bei der Ermittiung der Absoluttemperatur während eines Meßvorgangs die aktuellen Werte der für die Motorengleichung benötigten Motorkenngrößen in einer Vielzahl aufeinanderfolgender Meßzeitpunkte bestimmt, so daß man demzufolge für den Meßvorgang eine Vielzahl von Motorengleichungen erhält. Falls ein mehrere Motorkenngrößen berücksichtigendes Motorenmodell definiert und hieraus eine mehrere Motorkenngrößen berücksichtigende Motorengleichung abgeleitet wird, müssen zur Bestimmung der aktuellen Werte der berücksichtigten Motorkenngrößen oftmals nicht alle der Motorkenngrößen in den Meßzeitpunkten eines Meßvorgangs gemessen werden; vielmehr können eine oder mehrere Motorkenngrößen bei Kenntnis der anderen Motorkenngrößen aus den gemessenen Motorkenngrößen abgeleitet werden. Wird bsp. ein die Motorkenngrößen Motorstrom, Motorspannung und Motordrehzahl berücksichtigendes Motorenmodell definiert und hieraus eine die Motorkenngrößen Motorstrom, Motorspannung und Motordrehzahl berücksichtigende Motorengleichung abgeleitet, kann in den Meßzeitpunkten eines Meßvorgangs der Motorstrom und die Motorspannung gemessen werden und hieraus die Motordrehzahl abgeleitet werden oder es kann die Motordrehzahl und die Motorspannung gemessen werden und hieraus der Motorstrom abgeleitet werden.

Da die Absoluttemperatur (die tatsächliche Temperatur) zur Festlegung der Grenztemperatur und damit als Entscheidungskriterium für die Vorgabe des Stromflusses durch den Elektromotor herangezogen wird, kann der Elektromotor mit hoher Genauigkeit und einer hohen Zuverlässigkeit ohne Einschränkung der Betriebsbedingungen vor thermischer Überlastung geschützt werden; da die Bestimmung der Absoluttemperatur unter Berücksichtigung bereits bekannter Motorkenngrößen erfolgt, kann das Verfahren ohne zusätzlichen Aufwand, insbesondere ohne Platzbedarf oder Kosten für zusätzliche Sensoren realisiert werden.

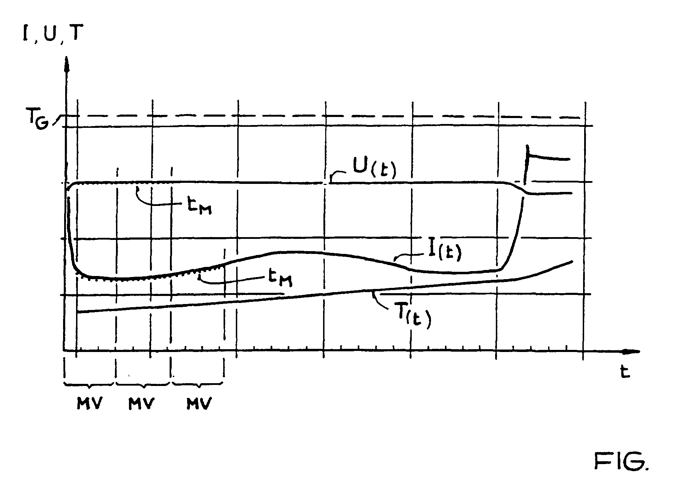

Im Zusammenhang mit der Zeichnung soll das Verfahren anhand eines Ausführungsbeispiels erläutert werden. Hierbei zeigt die Figur den zeitlichen Verlauf von Motorkenngrößen und der Temperatur während eines Betätigungsvorgangs des Elektromotors.

Eine elektrische Antriebseinheit mit einem permanenterregten Gleicnstrommotor als Elektromotor ist bsp. zur Realisierung der elektrischen Fensterheberfunktion eines Kraftfahrzeugs (als Fensterheberantrieb eines Kraftfahrzeugs) im Türsteuergerät des Kraftfahrzeugs integriert.

Dieser permanenterregte Gleichstrommotor als Elektromotor besitzt eine Nennleistung von bsp. 100 W und eine maximal zulässige Betriebstemperatur (Grenztemperatur für die Wicklung des Ankers) von bsp. 150 °C. Weiterhin sind Sensoren zur Erfassung der Motorspannung U und des Ankerstroms I des Elektromotors vorgesehen; hierzu können bsp. zu anderen Zwecken bereits im Elektromotor vorgesehene Sensoren eingesetzt werden: bsp. ist im Elektromotor eine Auswerteeinheit integriert, die bsp. zur Erfassung der Motorspannung U einen Spannungsteiler mit nachgeschaltetem A/D-Wandler und zur Erfassung des Ankerstroms I einen Meßwiderstand (Shunt) mit nachgeschaltetem Verstärker und A/D-Wandler aufweist.

Zur Bestimmung der Absoluttemperatur T des Elektromotors werden als temperaturabhängige Motorparameter der Ankerwiderstand R(T) und der magnetische Fluß $\Phi(T)$ herangezogen:

- Die Temperaturabhängigkeit des Ankerwiderstands R(T) ergibt sich aufgrund der Herstellung der Wicklung(en) des Elektromotors aus einem Material mit dem Temperaturkoeffizienten $\alpha$:

$$R(T) = R_{REF} \cdot [1 + \alpha(T - T_{REF})] \qquad (1)$$

Aus dieser Gleichung (1) kann die absolute Temperatur T bestimmt werden, wenn der Temperaturkoeffizient $\alpha$, die Referenztemperatur $T_{REF}$, der Referenzwiderstand $R_{REF}$ und der Widerstand R bekannt sind. Der Temperaturkoeffizient $\alpha$ ist für eine bestimmte Referenztemperatur $T_{REF}$ (bsp. $T_{REF}$ = 20°C) definiert (bsp. für Kupfer ergibt sich $\alpha$ = + 0.0038K$^{-1}$), der Referenzwiderstand $R_{REF}$ wird bsp. bei der Referenztemperatur $T_{REF}$ = 20°C durch eine Referenzmessung bestimmt; somit verbleibt als unbekannte Größe zur Bestimmung der Absoluttemperatur T des Elektromotors der Absolutwert des Ankerwiderstands R.

- Die Temperaturabhängigkeit des zur Erregung des Elektromotors erforderlichen (im Elektromotor wirksamen) magnetischen Flusses $\Phi(T)$ ergibt sich bei einer Erregung durch Permanentmagnete über die Temperaturabhängigkeit der Permeabilität des Magnetmaterials mit dem Temperaturkoeffizienten $\beta$. Es gilt somit für die Temperaturabhängigkeit des magnetischen Flusses $\Phi(T)$ ein äquivalenter Zusammenhang wie gemäß Gleichung (1) für den Ankerwiderstand R(T):

$$\Phi(T) = \Phi_{REF} \cdot [1 + \beta(T - T_{REF})] \qquad (2)$$

Aus dieser Gleichung (2) kann die absolute Temperatur T bestimmt werden, wenn der Temperaturkoeffizient $\beta$, die Referenztemperatur $T_{REF}$, der Referenzwert $\Phi_{REF}$ für den magnetischen Fluß $\Phi$ und der magnetische Fluß $\Phi$ bekannt sind. Der Temperaturkoeffizient $\beta$ ist für eine bestimmte Referenztemperatur $T_{REF}$ (bsp. $T_{REF}$ = 20°C) definiert (bsp. für Barium-Hartferrit ergibt sich $\beta$ = - 0.002K$^{-1}$), der Referenzwert für den magnetischen Fluß $\Phi_{REF}$ wird bsp. bei der Referenztemperatur $T_{REF}$ = 20°C durch eine Referenzmessung bestimmt; somit verbleibt als unbekannte Größe zur Bestimmung der Absoluttemperatur T des Elektromotors der Absolutwert des magnetischen Flusses $\Phi$.

Zur Bestimmung der Absolutwerte des Ankerwiderstand R und des magnetischen Flusses $\Phi$ wird ein die Motorkenngrößen Motorstrom I (Ankerstrom), Motorspannung U und Motordrehzahl n sowie die temperaturabhängigen Motorparameter Ankerwiderstand R(T) und magnetischer Fluß $\Phi(T)$ verknüpfendes Motorenmodell definiert und hieraus eine die Motorkenngrößen Ankerstrom I, Motorspannung U und Motordrehzahl n berücksichtigende Motorengleichung abgeleitet:

$$c\Phi(T) \cdot n = U - I \cdot R(T) - (dI/dt) \cdot L \qquad (3)$$

mit

c = Motorkonstante
L = Ankerinduktivität
dI/dt = zeitliche Ableitung des Ankerstroms I.

Aus dieser Motorengleichung (3) kann man sowohl den temperaturabhängigen Ankerwiderstand R(T) als auch den temperaturabhängigen magnetischen Fluß $\Phi(T)$ durch geeignete Verfahren bei Messung der Motorkenngrößen Ankerstrom I, Motorspannung U und Motordrehzahl n herleiten.

Während des Betätigungsvorgangs des Fensterheberantriebs werden mehrere aufeinanderfolgende Meßvorgänge MV durchgeführt. In mehreren aufeinanderfolgenden Meßzeitpunkten $t_M$ eines Meßvorgangs MV werden die Motorkenngrößen Ankerstrom I, Motorspannung U und Motordrehzahl n gemessen bzw. aus den gemessenen Motorgrößen abgeleitet und hieraus N Motorgleichungen gemäß Gleichung (3) abgeleitet. Das für einen Meßvorgang MV resultierende Gleichungssystem mit N Gleichungen wird durch ein geeignetes Verfahren gelöst; als Lösung erhält man die gesuchten Größen Ankerwiderstand R und (den mit einer Motorkonstanten c gewichteten) magnetischen Fluß $\Phi$ - bsp. erhält man mittels Gauss-Transformation einen Lösungsvektor [R, c$\Phi$].

Zur Lösung des Gleichungssystems werden pro Meßvorgang MV mindestens 2 Meßzeitpunkte $t_M$ benötigt (N $\geq$ 2), zur Erhöhung der Genauigkeit sollte aber die Anzahl der Meßzeitpunkte $t_M$ während des Meßvorgangs und damit die Anzahl N der Gleichungen wesentlich größer gewählt werden (N >> 2; bsp. N = 30). Außerdem sollten die Meßvorgänge MV bzw. die Meßzeitpunkte $t_M$ eines Meßvorgangs MV nicht (ausschließlich) während des stationären Betriebs gewählt werden, da die Meßwerte für die Motorkenngrößen dann (annähernd) übereinstimmen und eine Lösung des Gleichungssystems somit keine aussagekräftigen Resultate liefern würde.

In der Figur ist der zeitliche Verlauf der Motorkenngrößen Motorspannung U und Motorstrom I sowie der zeitliche Verlauf der Temperatur T während eines Betätigungsvorgangs dargestellt; bsp. schwankt die Motorspannung U während des Betätigungsvorgangs zwischen 0 und 15 V, der Motorstrom I zwischen 0 und 30 A und die Temperatur zwischen 20°C und 50°C.

Beispielsweise werden während des Betätigungsvorgangs 3 Meßvorgänge MV durchgeführt, wobei jeder Meßvorgang MV je nach Konditionierung der Koeffizentenmatrix des entstehenden Gleichungssystems eine unterschiedliche Anzahl an Meßzeitpunkten $t_M$ aufweist; bsp. werden 10 bis 50 Meßzeitpunkte $t_M$ pro Meßvorgang MV gewählt, typischerweise 30 Meßzeitpunkte $t_M$ pro Meßvorgang MV. Während der Meßzeitpunkte $t_M$ eines Meßvorgangs MV werden die aktuellen Werte der Motorkenngrößen Ankerstrom I und Motorspannung U gemessen und die Werte der Motordrehzahl n aus diesen beiden gemessenen Motorkenngrößen I, U abgeleitet. Insbesondere wird ein Meßvorgang MV zu Beginn (in der Anlaufphase) der Bewegung des Elektromotors durchgeführt, bsp. werden für diesen Meßvorgang MV in der Anlaufphase des Elektromotors 30 Meßzeitpunkte $t_M$ gewählt; der erste Meßzeitpunkt $t_M$ wird dabei genau zu Beginn der Bewegung des Elektromotors gewählt, d.h. gerade zu dem Zeitpunkt, zu dem sich der Elektromotor zu drehen beginnt.

Der mit den unter Verwendung der während der Meßzeitpunkte $t_M$ eines Meßvorgangs MV bestimmten Motorkenngrößen gemäß Gleichung (3) in Verbindung mit Gleichung (1) oder Gleichung (2) ermittelte Absolutwert der Temperatur T wird mit einer vorgegebenen Grenztemperatur $T_G$ (Maximaltemperatur) verglichen; bsp. wird eine Grenztemperatur $T_G$ von T = 150°C für die aus dem magnetischen Fluß $\Phi$ gemäß Gleichung (2) abgeleitete "Außentemperatur" des Elektromotors und eine Grenztemperatur von T = 200°C für die aus dem Ankerwiderstand R gemäß Gleichung (1) abgeleitete "Innentemperatur" des Elektromotors vorgegeben. Bei einem Überschreiten der Grenztemperatur $T_G$ werden geeignete Maßnahmen ergriffen: bsp. wird der Fensterheberantrieb abgeschaltet oder die erneute Betätigung des Fensterheberantriebs wird zeitweise verhindert.

**Patentansprüche**

1. Verfahren zum Schutz eines Elektromotors vor thermischer Überlastung, wobei eine mindestens einen temperaturabhängigen Motorparameter (R, $\Phi$) und mindestens eine Motorkenngröße (I, U, n) verknüpfende Motorengleichung anhand eines Motorenmodells für den Elektromotor definiert wird, daß mindestens ein Meßvorgang (MV) während des Betätigungsvorgangs des Elektromotors durchgeführt wird, bei dem in mindestens zwei aufeinanderfolgenden Meßzeitpunkten ($t_M$) die aktuellen Werte der mindestens einen Motorkenngröße (I, U, n) bestimmt werden, daß der Wert des mindestens einen temperaturabhängigen Motorparameters (R, $\Phi$) aus den Motorengleichungen für die Meßzeitpunkte ($t_M$) eines Meßvorgangs (MV) bestimmt wird, daß der Absolutwert der Temperatur (T) des Elektromotors anhand des funktionalen Zusammenhangs zwischen dem mindestens einen temperaturabhängigen Motorparameter (R, $\Phi$) und der Temperatur (T) ermittelt wird, und daß der Stromfluß durch den Elektromotor zum Schutz eines Elektromotors vor thermischer Überlastung definiert beeinflußt wird, wenn der ermittelte Absolutwert der Temperatur (T) des Elektromotors eine vorgegebene Grenztemperatur ($T_G$) erreicht, **dadurch gekennzeichnet, dass** die Motorkenngrößen Strom, Spannung und Drehzahl (I, U, n) verwendet werden und daraus mittels der Motorengleichung der zur Erregung des Elektromotors erforderliche magnetische Fluß ($\Phi$) als temperaturabhängiger Motorparameter ermittelt wird.

2. Verfahren nach Anspruch 1, **dadurch gekennzeichnet, dass** als temperaturabhängiger Motorparameter neben dem magnetischen Fluß ($\Phi$) auch der elektrische Widerstand (R) der Ankerwicklung des Elektromotors herangezogen wird.

3. Verfahren nach Anspruch 1 oder 2, **dadurch gekennzeichnet, daß** der funktionale Zusammenhang zwischen dem magnetischen Fluß ($\Phi$) sowie ggfs. dem Widerstand (R) und der Temperatur (T) unter Verwendung eines Referenzwerts ($R_{REF}$, $\Phi_{REF}$) für den magnetischen Fluß ($\Phi$) sowie ggfs. den Widerstand (R) definiert wird, und daß der/die Referenzwert(e) ($R_{REF}$, $\Phi_{REF}$) für den magnetische Fluß (Φ) sowie ggfs. dem Widerstand (R) durch eine Referenzmessung bei einer Referenztemperatur ($R_{REF}$) ermittelt wird.

4. Verfahren nach Anspruch 1 oder 2, **dadurch gekennzeichnet, daß** der funktionale Zusammenhang zwischen dem magnetischen Fluß (Φ) sowie ggfs. dem Widerstand (R) und der Temperatur (T) unter Verwendung eines Referenzwerts ($R_{REF}$, $\Phi_{REF}$) für den magnetischen Fluß (Φ) sowie ggfs. dem Widerstand (R) definiert wird, und daß der Referenzwert ($R_{REF}$, $\Phi_{REF}$) als Normwert bei einer Referenztemperatur ($R_{REF}$) vorgegeben wird.

5. Verfahren nach einem der Ansprüche 1 bis 4, **dadurch gekennzeichnet, daß** die Werte mindestens einer während eines Meßvorgangs (MV) und/oder eines Betätigungsvorgangs des Elektromotors bestimmten Motorkenngröße (U, I, n) bei nachfolgenden Meßvorgängen (MV) und/oder Betätigungsvorgängen des Elektromotors berücksichtigt werden.

6. Verfahren nach einem der Ansprüche 1 bis 5, **dadurch gekennzeichnet, daß** während eines Meßvorgangs (MV) die aktuellen Werte der mindestens einen Motorkenngröße (U, I, n) in einer Vielzahl aufeinanderfolgender Meßzeitpunkte ($t_M$) bestimmt werden.

7. Verfahren nach einem der Ansprüche 1 bis 6, **dadurch gekennzeichnet, daß** der Absolutwert der Temperatur (T) des Elektromotors anhand der in den Meßzeitpunkten ($t_M$) eines Meßvorgangs (MV) abgeleiteten Motorengleichungen durch Matrizen-Transformation ermittelt wird.

8. Verfahren nach einem der Ansprüche 1 bis 6, **dadurch gekennzeichnet, daß** der Absolutwert der Temperatur (T) des Elektromotors anhand der in den Meßzeitpunkten ($t_M$) eines Meßvorgangs (MV) abgeleiteten Motorengleichungen durch einen adaptiven Algorithmus ermittelt wird.

9. Verfahren nach einem der Ansprüche 2 bis 8, **dadurch gekennzeichnet, daß** unterschiedlichen temperaturabhängigen Motorparametem (R, Φ) unterschiedliche Grenztemperaturen ($T_G$) zugeordnet werden.

10. Verfahren nach einem der Ansprüche 1 bis 9, **dadurch gekennzeichnet, daß** in den Meßzeitpunkten ($t_M$) eines Meßvorgangs (MV) der Motorstrom (I) und die Motorspannung (U) gemessen werden und daß die Motordrehzahl (n) aus dem Motorstrom (I) und der Motorspannung (U) abgeleitet wird.

11. Verfahren nach einem der Ansprüche 1 bis 9, **dadurch gekennzeichnet, daß** in den Meßzeitpunkten ($t_M$) eines Meßvorgangs (MV) die Motordrehzahl (n) und die Motorspannung (U) gemessen werden und daß der Motorstrom (I) aus der Motordrehzahl (n) und der Motorspannung (U) abgeleitet wird.

12. Verfahren nach einem der Ansprüche 1 bis 11, **dadurch gekennzeichnet, daß** der Stromfluß durch den Elektromotor abgeschaltet wird, wenn der ermittelte Absolutwert der Temperatur (T) des Elektromotors die Grenztemperatur ($T_G$) erreicht.

13. Verfahren nach einem der Ansprüche 1 bis 12, **dadurch gekennzeichnet, daß** der Stromfluß durch den Elektromotor für ein vorgegebenes Zeitintervall gesperrt wird, wenn der ermittelte Absolutwert der Temperatur (T) des Elektromotors die Grenztemperatur ($T_G$) erreicht.

## Claims

1. Method for protecting an electric motor against thermal overload, a motor equation combining at least one temperature-dependent motor parameter (R, Φ) and at least one motor characteristic quantity (I, U, n) being defined on the basis of a motor model for the electric motor,
   that at least one measuring process (MV) is carried out during the operating process of the electric motor, in which in at least two successive measuring times ($T_M$) the current values of the at least one motor characteristic quantity (I, U, n) are determined,
   that the value of the at least one temperature-dependent motor parameter (R, Φ) is determined from the motor equations for the measuring times ($T_M$) of a measuring process (MV),
   that the absolute value of the temperature (T) of the electric motor is detected on the basis of a functional influence between the at least one temperature-dependent motor parameter(R, Φ) and the temperature (T),
   and that the current flow through the electric motor for protecting an electric motor against thermal overload is affected in a defined way, if the detected absolute value of the temperature (T) of the electric motor reaches a given limiting temperature ($T_G$), **characterized in that**
   the motor characteristic quantities current, electric voltage and speed (I, U, n) are used and that from these quantities the magnetic flow (Φ) required for exciting the electric motor is detected as a temperature-dependent motor parameter by means of the motor equation.

2. Method in accordance with claim 1, **characterized in that** apart from the magnetic flow (Φ) also the electric resistance (R) of the armature winding of the electric motor is used as a temperature-dependent motor parameter.

3. Method according to claim 1 or 2, **characterized in that** the functional influence between the magnetic flow ($\Phi$) and, if applicable, the resistance (R) and the temperature (T) while using a reference value ($R_{REF,}$ $\Phi_{REF}$) is defined for the magnetic flow ($\Phi$) and, if applicable, the resistance (R), and **in that** the reference value(s) ($R_{REF}$, ($\Phi_{REF}$) for the magnetic flow ($\Phi$) and, if applicable, the resistance (R) is/are detected by a reference measurement at a reference temperature ($R_{REF}$).

4. Method according to claim 1 or 2, **characterized in that** the functional influence between the magnetic flow ($\Phi$) and, if applicable, the resistance (R) and the temperature (T) while using a reference value ($R_{REF}$, ($\Phi_{REF}$) is defined for the magnetic flow ($\Phi$) and, if applicable, the resistance (R), and **in that** the reference value ($R_{REF}$, $\Phi_{REF}$) is given as a nominal value at a reference temperature ($R_{REF}$).

5. Method according to one of the claims 1 to 4, **characterized in that** the values of at least one motor characteristic quantity (I, U, n) determined during a measuring process (MV) and/or a operating process of the electric motor are taken into consideration for successive measuring processes and/or operating processes of the electric motor.

6. Method according to one of the claims 1 to 5, **characterized in that** during a measuring process (MV) the current values of the at least one motor characteristic quantity (I, U, n) are determined in a plurality of successive measuring times ($T_M$).

7. Method according to one of the claims 1 to 6, **characterized in that** the absolute value of the temperature (T) of the electric motor is detected by matrix transformation on the basis of the motor equations derived in the measuring times ($T_M$) of a measuring process (MV).

8. Method according to one of the claims 1 to 6, **characterized in that** the absolute value of the temperature (T) of the electric motor is detected by an adaptive algorithm on the basis of the motor equations derived in the measuring times ($T_M$) of a measuring process (MV).

9. Method according to one of the claims 2 to 8, **characterized in that** different limiting temperatures ($T_G$) are assigned to different temperature-dependent motor parameters(R, $\Phi$).

10. Method according to one of the claims 1 to 9, **characterized in that** in the measuring times ($T_M$) of a measuring process (MV) the motor current (1) and the motor voltage (U) are measured and **in that** the motor speed (n) is derived from the motor current (I) and the motor voltage (U).

11. Method according to one of the claims 1 to 9, **characterized in that** in the measuring times ($T_M$) of a measuring process (MV) the motor speed (n) and the motor voltage (U) are measured and **in that** the motor current (I) is derived from the motor speed (n) and the motor voltage (U).

12. Method according to one of the claims 1 to 11, **characterized in that** the current flow through the electric motor is switched off, if the detected absolute value of the temperature (T) of the electric motor reaches the limiting temperature ($T_G$).

13. Method according to one of the claims 1 to 12, **characterized in that** the current flow through the electric motor is blocked for a given time interval, if the detected absolute value of the temperature (T) of the electric motor reaches the limiting temperature ($T_G$).

## Revendications

1. Procédé pour la protection d'un moteur électrique contre une surcharge thermique,
où une équation de moteur associant un paramètre de moteur dépendant de la température (R, $\Phi$) au moins à une grandeur caractéristique de moteur (I, U, n) au moins est définie à partir d'un modèle de moteur pour le moteur électrique,
où au moins un processus de mesure (MV) est appliqué pendant la manoeuvre du moteur électrique,
où les valeurs actuelles d'au moins l'une des grandeurs caractéristiques de moteur (I, U, n) sont définies à au moins deux moments de mesure consécutifs ($t_M$),
où la valeur d'au moins l'un des paramètres de moteur dépendant de la température (R, $\Phi$) est définie à partir des équations de moteur pour les moments de mesure ($t_M$) d'un processus de mesure (MV),
où la valeur absolue de la température (T) du moteur électrique est déterminée à partir de la relation fonctionnelle entre au moins l'un des paramètres de moteur dépendant de la température (R, $\Phi$) et la température (T),
et où la conduction de courant est influencée de manière définie par le moteur électrique pour la protection d'un moteur électrique contre une surcharge thermique quand la valeur absolue déterminée pour la température (T) du moteur électrique atteint une température limite prescrite ($T_G$), **caractérisé en ce que**
les grandeurs caractéristiques courant, tension et vitesse de rotation (I, U, n) sont appliquées et que le flux magnétique (Φ) nécessité pour l'excitation du moteur électrique est déterminé à partir d'elles au moyen de l'équation de moteur en tant que paramètre de moteur dépendant de la température.

2. Procédé selon la revendication 1, **caractérisé en ce qu'**en plus du flux magnétique (Φ), il est également recouru à la résistance électrique (R) de l'enroulement d'induit du moteur électrique en tant que paramètre de moteur dépendant de la température.

3. Procédé selon la revendication 1 ou 2, **caractérisé en ce que** la relation fonctionnelle entre le flux magnétique (Φ) et éventuellement la résistance (R), d'une part, et la température (T), d'autre part, est définie en appliquant une valeur de référence ($R_{REF}$, $\Phi_{REF}$) pour le flux magnétique (Φ) et éventuellement la résistance (R), et **en ce que** la / les valeur(s) de référence ($R_{REF}$, $\Phi_{REF}$) pour le flux magnétique (Φ) et éventuellement la résistance (R) est (sont) saisie(s) par mesure de référence à une température de référence ($R_{REF}$).

4. Procédé selon la revendication 1 ou 2, **caractérisé en ce que** la relation fonctionnelle entre le flux magnétique (Φ) et éventuellement la résistance (R), d'une part, et la température (T), d'autre part, est définie en appliquant une valeur de référence ($R_{REF}$, $\Phi_{REF}$) pour le flux magnétique (Φ) et éventuellement la résistance (R), et **en ce que** la valeur de référence ($R_{REF}$, $\Phi_{REF}$) est prescrite en tant que valeur normale à une température de référence ($R_{REF}$).

5. Procédé selon l'une des revendications 1 à 4, **caractérisé en ce que** les valeurs d'au moins une grandeur caractéristique de moteur (I, U, n) définie pendant un processus de mesure (MV) et/ou une manoeuvre du moteur électrique sont prises en compte pour les processus de mesure (MV) suivants et/ou les manoeuvres suivantes du moteur électrique.

6. Procédé selon l'une des revendications 1 à 5, **caractérisé en ce que** les valeurs actuelles d'au moins l'une des grandeurs caractéristiques de moteur (I, U, n) sont définies à plusieurs moments de mesure consécutifs ($t_M$) pendant un processus de mesure (MV).

7. Procédé selon l'une des revendications 1 à 6, **caractérisé en ce que** la valeur absolue de la température (T) du moteur électrique est déterminée par transformation matricielle à partir des équations de moteur déduites aux moments de mesure ($t_M$) d'un processus de mesure (MV).

8. Procédé selon l'une des revendications 1 à 6, **ca-**

ractérisé en ce que la valeur absolue de la température (T) du moteur électrique est déterminée par un algorithme adaptatif à partir des équations de moteur déduites aux moments de mesure ($t_M$) d'un processus de mesure (MV).

9. Procédé selon l'une des revendications 2 à 9, **caractérisé en ce que** différentes températures limites ($T_G$) sont affectées à différents paramètres de moteur dépendants de la température (R, Φ).

10. Procédé selon l'une des revendications 1 à 9, **caractérisé en ce que** le courant du moteur (I) et la tension du moteur (U) sont mesurés aux moments de mesure ($t_M$) d'un processus de mesure (MV), et **en ce que** la vitesse de rotation du moteur (n) est déduite du courant du moteur (I) et la tension du moteur (U).

11. Procédé selon l'une des revendications 1 à 9, **caractérisé en ce que** la vitesse de rotation du moteur (n) et la tension du moteur (U) sont mesurées aux moments de mesure ($t_M$) d'un processus de mesure (MV), et **en ce que** le courant du moteur (I) est déduit de la vitesse de rotation du moteur (n) et de la tension du moteur (U).

12. Procédé selon l'une des revendications 1 à 11, **caractérisé en ce que** la conduction de courant par le moteur électrique est interrompue quand la valeur absolue saisie pour la température (T) du moteur électrique atteint la température limite ($T_G$).

13. Procédé selon l'une des revendications 1 à 12, **caractérisé en ce que** la conduction de courant par le moteur électrique est arrêtée pour un intervalle temporel prescrit quand la valeur absolue saisie pour la température (T) du moteur électrique atteint la température limite ($T_G$).

FIG.